# EUROPÄISCHE PATENTSCHRIFT

(11) **EP 0 565 037 B1**
(45) Veröffentlichungstag und Bekanntmachung des Hinweises auf die Patenterteilung: **29.12.1997**
(21) Anmeldenummer: 93105628.7
(22) Anmeldetag: 06.04.1993
(51) Int. Cl.: B66F 9/075, B60N 2/38

(54) **Gabelstapler**
Fork-lift truck
Chariot-élévateur à fourches

(30) Priorität: 10.04.1992 DE 9205021 U
(43) Veröffentlichungstag der Anmeldung: 13.10.1993
(73) Patentinhaber: R. BAUMANN + CO., 77830 Bühlertal (DE)
(72) Erfinder: Baumann, Rolf, W-7582 Bühlertal (DE)
(74) Vertreter: Dipl.-Ing. Heiner Lichti Dipl.-Phys. Dr.rer.nat. Jost Lempert Dipl.-Ing. Hartmut Lasch

(56) Entgegenhaltungen:
- WO-A-90/00360
- DE-A- 3 042 956
- GB-A- 525 663
- GB-A- 2 170 700
- US-A- 2 200 904
- US-A- 2 290 464
- US-A- 3 394 964
- US-A- 4 834 452

## Beschreibung

Die Erfindung betrifft einen Gabelstapler, insbesondere einen Front- oder Seitenstapler, mit einem fahrzeugfesten Aufbau, an dem ein Sitz um eine im wesentlichen vertikale Achse drehbar gelagert ist.

In vielen Bereichen der Transport- und Lagertechnik finden Gabelstapler Verwendung, da sich mit ihnen in einfacher Weise der Transport von Gütern bzw. deren Ein- und Auslagerung in bzw. aus Regallagern sehr individuell gestalten läßt. Die Gabelstapler weisen üblicherweise eine Fahrerkabine auf, von der aus eine Bedienperson sämtliche Bewegungsvorgänge des Gabelstaplers steuert. Die Bedienperson sitzt dabei auf einem Sitz, der in Fahrtrichtung, d. h. nach vorne, ausgerichtet ist. Sowohl beim Frontstapler als auch beim Seitenstapler muß die Bedienperson beim Rückwärtsfahren nach hinten schauen, wozu sie sich auf dem Sitz drehen muß. Die gleiche Notwendigkeit besteht darüber hinaus bei Seitenstaplern, um das mit Hilfe der seitlichen Gabeln aufgenommene Gut beobachten zu können. Wenn der Sitz starr am Fahrzeug montiert ist, muß die Bedienperson den Oberkörpoer drehen, um nach hinten schauen zu können. Dies ist nicht nur relativ anstrengend, sondern kann auch im Laufe der Zeit zu gesundheitlichen Schädigungen, insbesondere der Wirbelsäule, führen.

Aus der DE-A-30 42 956 ist ein Frontstapler bekannt, bei dem der Sitz um eine vertikale Achse drehbar ist, um der Bedienperson das Nachhintenschauen zu erleichtern. Ein derartiger drehbarer Sitz benötigt jedoch eine relativ große Kabinenbreite. Seitenstapler werden in vielen Fällen aber in Regallagern eingesetzt, die üblicherweise eine Regalgangbreite von nur 2,20 m aufweisen. Die notwendigerweise vorhandene Fahrerkabine muß deshalb sehr schmal ausgebildet werden, so daß der für eine vollständige Drehung des Sitzes um 90° bzw. 180° benötigte Raum nicht zur Verfügung steht. Bei Seitenstaplern kann der Sitz aus diesen Gründen aus seiner nach vorne ausgerichteten Ausgangslage lediglich um etwa 30° geschwenkt werden, so daß die Bedienperson trotz der Drehbarkeit dieses Sitzes ihren Oberkörper bzw. Kopf relativ stark drehen muß, um nach hinten blicken zu können, womit die genannten Probleme verbunden sind.

Aus der GB-A-2 170 700 ist es bekannt, an einem Sitz eines Kraftfahrzeuges eine kombinierte Translations- und Rotationsbewegung vorzusehen, in dem zwei aufeinanderliegende Platten relativ zueinander drehbar und verschiebbar sind. Diese schwimmende Lagerung der Platten ermöglicht zwar eine weitgehende Verstellung des Sitzes, jedoch ist eine sichere Positionierung des Sitzes während des Betriebes des Fahrzeuges nicht gegeben, so daß dieser Sitz für Gabelstapler nicht anwendbar ist. Darüberhinaus ist der konstruktive Aufwand für einen derartigen Sitz sehr hoch.

Der Erfindung liegt die Aufgabe zugrunde, einen Gabelstapler mit einem Sitz zu schaffen, der trotz beengter Platzverhältnisse eine ausreichende Drehbarkeit gestattet.

Diese Aufgabe wird erfindungsgemäß mit einem Gabelstapler gemäß Anspruch 1 gelöst.

Die Drehbarkeit der bekannten Sitze ist üblicherweise dadurch beschränkt, daß die Rückenlehne an die Seitenwand oder ein anderes Anbauteil der Kabine anstößt. Mit der erfindungsgemäßen Verlagerung des Drehpunktes ist es möglich, einen größeren Abstand zwischen der Rückenlehne und der Seitenwand einzustellen, wodurch der Dreh- bzw. Schwenkbereich vergrößert ist. Trotz des geringen, in der Kabine zur Verfügung stehenden Raumes kann auf diese Weise ein ausreichender Schwenkbereich für den Sitz erreicht werden, wodurch die Bedienperson entlastet ist.

Um einerseits eine ausreichende Stabilität der Lagerung des Sitzes zu gewährleisten und andererseits eine gute Führung während der Verstellbewegung zu erreichen, ist vorgesehen, daß die Achse entlang einer am Aufbau auszubildenden Kulisse verschiebbar ist. Auf diese Weise können darüberhinaus reproduzierbare Verstellbewegungen erreicht werden, die die Handhabung des Sitzes erleichtern.

Eine konstruktiv einfache Ausgestaltung ist dadurch erreicht, daß am Aufbau eine Bodenplatte angebracht ist, in der eine als Kulisse dienende Ausnehmung ausgebildet ist, in die die vertikale Achse eingesetzt ist. Die vorzugsweise aus Stahl ausgebildete Bodenplatte kann gleichzeitig auch als Gleit- bzw. Führungslager für den Sitz dienen, so daß dessen Verstellung bzw. Verschiebung erleichtert ist. Die Ausnehmung gewährleistet im Zusammenwirken mit der in sie eingesetzten Achse, die vorzugsweise von einem am Sitz festgelegten Bolzen gebildet ist, eine leichtgängige Relativbewegung dieser Bauteile.

Gemäß der Erfindung ist vorgesehen, daß in dem vorzugsweise zum Fahrzeugende weisenden Bereich der Ausnehmung ein im wesentlichen in Fahrzeuglängsrichtung verlaufender, gradliniger Ausnehmungsabschnitt ausgebildet ist, in dem der Bolzen in Querrichtung spielfrei aufnehmbar ist. Wenn der Bolzen vollständig in den gradlinigen Ausnehmungsabschnitt eingeführt ist, ist der Sitz an einer Verschiebung in Querrichtung sowie nach hinten durch die Anlage des Bolzens an den Ausnehmungswänden gehindert. Diese Position bildet aufgrund der stabilen Halterung vorzugsweise die Normal- bzw. Ausgangsstellung des Sitzes, in der er sich während der Vorwärtsfahrt des Gabelstaplers befindet, wobei er nach vorne ausgerichtet ist. Um der Bedienperson das Erreichen der Normal- bzw. Ausgangsstellung des Sitzes deutlich zu machen, ist es vorteilhaft, wenn der Bolzen in seiner Endlage in dem gradlinigen Ausnehmungsabschnitt verrastbar ist.

Die Ausnehmung kann grundsätzlich jede beliebige Form annehmen, d. h. sie ist nicht auf eine gradlinige oder gekrümmte Bahn mit einer der Breite des Bolzens entsprechenden Weite beschränkt. Es hat sich jedoch bewährt, daß die Ausnehmung im wesentlichen dreieckförmig ausgebildet ist, wobei eine Dreieckseite in Fahrzeuglängsrichtung und eine andere Dreiecksseite in Fahrzeugquerrichtung verläuft. Auf diese Weise kann sowohl eine Bewegung des Sitzes in Fahrzeuglängsrichtung als auch senkrecht dazu erreicht werden, wobei keine bestimmten Verstellbewegungen vorgegeben sind, so daß unterschiedliche Benutzer des Sitzes diesen jeweils individuell verstellen können. Die in Fahrzeugquerrichtung verlaufende Seite der Ausnehmung erstreckt sich dabei sinnvollerweise in die der Rückenlehne des Sitzes bei dessen Drehung abgewandten Richtung, so daß durch Verschieben der Achse entlang der in Fahrzeugquerrichtung verlaufenden Seite der Ausnehmung der Abstand zwischen der Rückenlehne und der Kabinenwand vergrößert werden kann. Alternativ dazu ist es auch möglich, daß die Ausnehmung im wesentlichen L-förmig ausgebildet ist, wobei der eine Schenkel in Fahrzeuglängsrichtung, vorzugsweise entlang der Mittellängsackse des Sitzes, und der andere Schenkel in Fahrzeugquerrichtung angeordnet ist.

Der Bolzen kann auf vielerlei Arten am Sitz befestigt sein. Vorzugsweise ist jedoch vorgesehen, daß der Sitz eine Fußplatte aufweist, an der der Bolzen befestigt, beispielsweise angeschweißt, ist. Dabei erstreckt sich der Bolzen im wesentlichen im rechten Winkel zu der Fußplatte. Auf diese Weise ist es möglich, daß die Fußplatte nach Einsetzen des Bolzens in die Ausnehmung vollflächig auf der Bodenplatte des Aufbaus aufliegt, wodurch bei der Verschiebung bzw. Verstellung des Sitzes eine gute Führung unter Verminderung der Kippgefahr erreicht ist. Es ist jedoch auch möglich, zur Herabsetzung der Reibung zwischen der Bodenplatte und der Fußplatte entweder eine Gleitschicht anzuordnen oder die beiden Platten unter Zwischenschaltung von Rollen oder Gleitnocken aufeinanderzulegen, so daß eine leichtgängige Verstellbewegung erreicht werden kann.

Um einen sicheren Betrieb des Gabelstaplers zu gewährleisten, ist es notwendig, den Sitz relativ zu dem Gabelstapler festlegen zu können. Erfindungsgemäß ist deshalb vorgesehen, daß am Sitz eine den Sitz relativ zum Aufbau festlegende Arretiervorrichtung ausgebildet ist. Die Arretiervorrichtung ermöglicht es, den Sitz in jeder Stellung relativ zum Aufbau, d. h. unabhängig von der Position der Achse sowie von der Schwenkposition, festzulegen, so daß auch in den von der Ausgangslage abweichenden Positionen des Sitzes ein sicheres Arbeiten ermöglicht und eine unbeabsichtigte Verstellung des Sitzes vermieden ist.

Ein konstruktiv einfacher Aufbau für die Arretierungsvorrichtung ist erreicht, wennn sie zwei auf dem Bolzen verschieblich gelagerte Reibscheiben aufweist, die mittels einer Klemmvorrichtung von entgegengesetzten Seiten gegen die Bodenplatte spannbar sind. Durch die Anziehen der Klemmvorrichtung werden die beiden Reibscheiben gegen die Bodenplatte des fahrzeugsfesten Aufbaus gedrückt und über Reibungskräfte relativ zu dieser festgelegt. Auf diese Weise sind auch der Bolzen, der die Reibscheiben im wesentlichen spielfrei durchdringt, sowie der damit verbundene Sitz an einer Bewegung relativ zu der Bodenplatte gehindert. Durch Lösen der Klemmvorrichtung kommen die Reibscheiben von dem Reibeingriff mit der Bodenplatte frei, so daß die Sitzverstellung möglich ist. Es hat sich gezeigt, daß gute Klemmkräfte erreicht werden können, wenn die Reibscheiben aus Stahl und/oder Kunststoff bestehen.

Da die Reibscheiben auf dem Bolzen in desssen Längsrichtung verschieblich gelagert sind, kann als Klemmvorrichtung in einfacher Weise eine auf den Bolzen aufgeschraubte Mutter verwendet werden. Durch Anziehen oder Lösen der Mutter können die Reibscheiben somit mit der Bodenplatte in Eingriff gebracht oder von dieser gelöst werden. Alternativ dazu ist es jedoch auch möglich, die Scheiben mittels Hydraulikzylinder gegen die Bodenplatte zu drücken bzw. aus dem Eingriff zu lösen.

In bestimmten Betriebssituationen des Gabelstaplers, beispielsweise bei dessen Fahrbewegung und insbesondere bei einem abrupten Abbremsen, wirken auf den Sitz in Folge der Trägheit der Masse der Bedienperson relativ große Belastungen ein, die gegebenenfalls von der Reib-Klemmverbindung zwischen dem Sitz und der Bodenplatte nicht aufgenommen werden können. Aus Sicherheitsgründen kann deshalb eine zusätzliche, den Sitz in bestimmten Stellungen relativ zum Aufbau festlegende Sicherungsvorrichtung vorgesehen sein. Die Sicherungsvorrichtung ist vorzugsweise von einem Sperrzylinder gebildet, der in seiner sichernden Stellung die Fußplatte und die Bodenplatte durchgreift, so daß eine Relativbewegung zwischen den beiden Platten verhindert ist.

Wenn die Bedienperson den Sitz des Gabelstaplers verstellen bzw. schwenken möchte, muß sie zuerst den Sperrzylinder in eine freigebende Stellung bringen. Vorzugsweise ist der Sperrzylinder über einen Schalter am Armaturenbrett des Gabelstaplers betätigbar. Gleiches kann auch für die Betätigung der Klemmvorrichtung vorgesehen seien. Auf diese Weise ist ein einfacher Arbeitsablauf ermöglicht. Aus Sicherheitsgründen ist es sinnvoll, daß der Sperrzylinder nur in Ruhestellung des Gabelstaplers in seine freigebende Stellung bringbar ist. Dies kann beispielsweise dadurch erreicht werden, daß ein Sensor den Fahrzustand des Gabelstaplers erfaßt und eine Betätigungsleitung für den Sperrzylinder, beispielsweise eine Hydraulikleitung, solange geschlossen gehalten wird, wie der Sensor eine Bewegung des Gabelstaplers feststellt.

Weitere Einzelheiten und Merkmale der Erfindung sind aus der folgenden Beschreibung eines Ausführungsbeispiels unter Bezugnahme auf die Zeichnung ersichtlich. Es zeigen:
- Figur 1: eine schematische Seitenansicht eines Sitzes,
- Figur 2: eine Aufsicht auf die Tragkonstruktion gemäß Figur 1 und
- Figur 3: eine Aufsicht auf den Sitz gemäß Figur 1 in verschiedenen Schwenkstellungen.

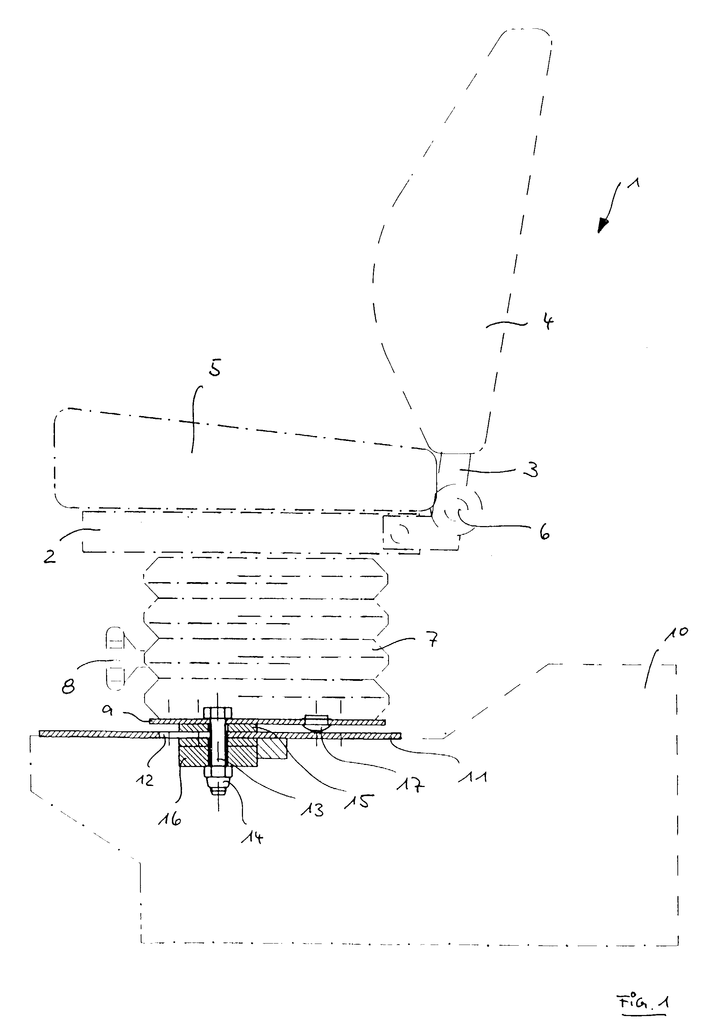

Gemäß Figur 1 weist ein Sitz 1 eines nicht näher dargestellten Gabelstaplers einen Sitzflächen-Tragrahmen 2 auf, auf dem ein Sitzpolster 5 befestigt ist. Am hinteren Ende des Tragrahmens 2 ist über ein Gelenk 6 ein Rückenlehnen-Tragrahmen 3 gelenkig angeschlossen, an dem ein Rückenpolster 4 befestigt ist. Der Sitz 1 ist durch Drehen eines Handrades 8 in bekannter Weise in der Höhe verstellbar, wobei die dazu notwendigen Mimik von einer Manschette 7 überdeckt und geschützt ist.

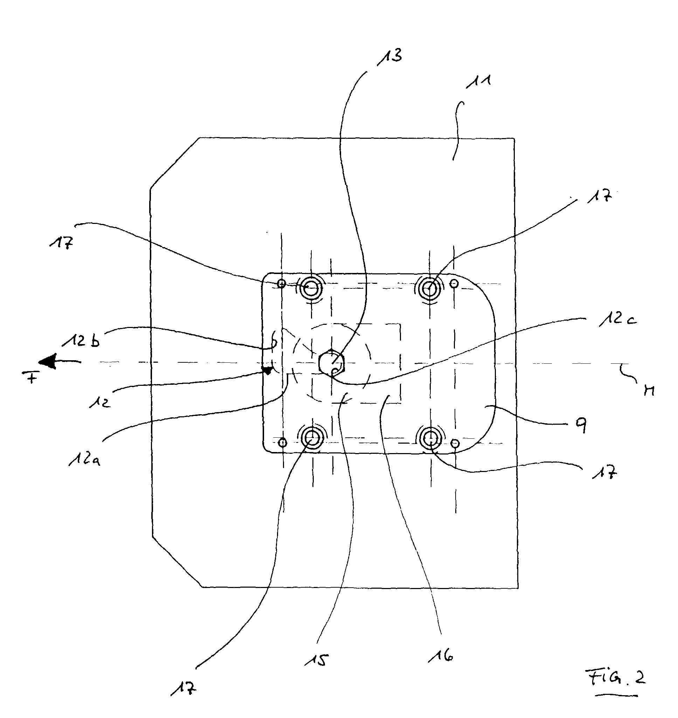

An seinem unteren Ende weist der Sitz 1 eine sich im wesentlichen horizontal erstreckende, stählerne Fußplatte 9 auf, über die der Sitz 1 an dem fahrzeugfesten Aufbau 10 des Gabelstaplers gelagert ist. Der Aufbau 10, der in Figur 1 nur angedeutet ist, weist eine stählerne Bodenplatte 11 auf, die im wesentlichen parallel zu der Fußplatte 9 verläuft und für diese eine Auflagefläche bildet. Wie insbesondere Figur 2 zu entnehmen ist, ist in der Bodenplatte 11 eine durchgehende Ausnehmung 12 ausgebildet, die eine im wesentlichen dreieckförmige Gestalt aufweist. Die eine Seitenkante 12a der Ausnehmung 12 verläuft in Fahrzeuglängsrichtung auf einer Seite der Längsmittelachse M des Sitzes 1, während eine daran anschließende Seitenkante 12b im rechten Winkel dazu verläuft. In dem zum Fahrzeugende weisenden Bereich der Ausnehmung 12, d. h. entgegengesetzt zur normalen Fahrtrichtung F, schließt sich ein gradliniger Ausnehmungsabschnitt 12c an, der symmetrisch zur Längsmittelachse M entlang dieser verläuft.

An der Fußplatte 9 ist ein sich senkrecht nach unten erstreckender Bolzen 13 befestigt, der in die Ausnehmung 12 eingesetzt ist und in dieser verschiebbar ist. Der Durchmesser des Bolzens 13 entspricht im wesentlichen der Weite des gradlinigen Ausnehmungsabschnitts 12c, so daß der Bolzen 13 im wesentlichen spielfrei in diesem eingeführt werden kann, wie in Figur 2 dargestellt ist.

Zwischen der Fußplatte 9 und der Bodenplatte 11 ist eine obere Reibscheibe 15 angeordnet, die mit einem Loch auf den Bolzen 13 aufgeschoben und somit in dessen Längsrichtung bewegbar ist. Der Sitz 1 ist zusätzlich über vier an der Fußplatte 9 befestigte Gleitnocken 17 an der Bodenplatte 11 abgestützt. Das Maß des Vorstehens der Gleitnocken 17 über die Fußplatte 9 entspricht dabei im wesentlichen der Dicke der oberen Reibscheibe 15.

Auf der der oberen Reibscheibe 15 entgegengesetzten Seite der Bodenplatte 11 ist eine untere Reibscheibe 16 angeordnet, die ebenfalls mit einem Loch auf den Bolzen 13 aufgeschoben und in dessen Längsrichtung beweglich ist. Wie in Figur 1 gezeigt ist, durchdringt somit der Bolzen 13 die Fußplatte 9, die obere Reibscheibe 15, die Bodenplatte 11 und die untere Reibscheibe 16 in dieser Reihenfolge, wobei er über die untere Reibscheibe 16 vorsteht. In dem vorstehenden Bereich des Bolzens 13 ist ein Gewinde ausgebildet, auf das eine Mutter 14 aufgeschraubt ist. Durch Anziehen der Mutter 14 werden die Fußplatte 9, die beiden Reibscheiben 15 und 16, sowie die Bodenplatte 11 zusammengespannt, wodurch sie an einer Bewegung relativ zueinander gehindert sind.

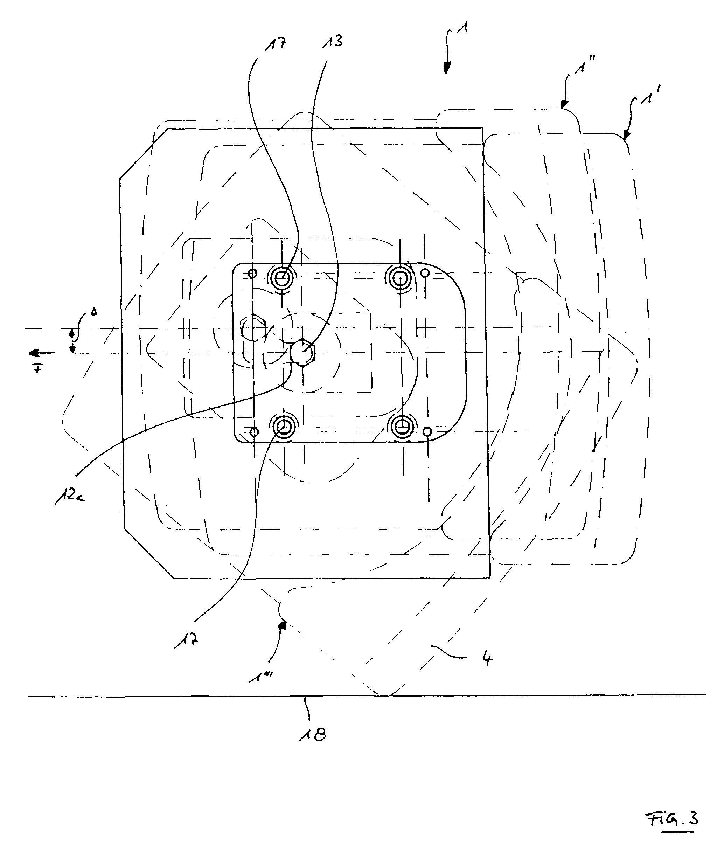

In Figur 3 sind einzelne Phasen der Schwenk-, bzw. Verstellbewegung des Sitzes 1 gezeigt. Während einer Vorwärtsfahrt in Richtung des Pfeils F befindet sich der Sitz in seiner Ausgangsposition 1', in der der Bolzen 13 in dem gradlinigen Ausnehmungsbereich 12c der Ausnehmung 12 aufgenommen und der Sitz mittels der Reibscheiben 15 und 16 an der Bodenplatte 11 des fahrzeugefesten Aufbaus 10 festgelegt ist. Zum Schwenken des Sitzes 1 wird der Reibeingriff der Reibscheiben 15 und 16 gelöst, so daß der Bolzen 13 in der Ausnehmung 12 frei verschieblich ist.

In Figur 3 ist eine Kabinenwand 18 angedeutet, die eine freie Drehbarkeit des Sitzes 1 verhindert. Um den Sitz gemäß Figur 3 im Uhrzeigersinn zu schwenken, wird der Sitz zunächst nach vorne, bzw. gemäß Figur 3 nach links und anschließend oder gleichzeitig nach oben verschoben, so daß der Sitz in die gestrichelt dargestellte Lage 1" gelangt, in der der Bolzen 13 um ein Maß Δ von der bei der Drehung mit der Rückenlehne in Anlage kommenden Kabinenwand 18 abgerückt ist. In dieser Position wird der Sitz um den Bolzen 13 in die maximale Schwenklage 1''' gebracht, in der die Rückenlehne an der gemäß Figur 3 unteren Kabinenwand 18 anliegt. Durch die Verschiebung des Bolzens und somit der Drehachse des Sitzes und die damit verbundene Vergrößerung des Abstandes der Drehachse von der Kabinenwand kann der Schwenkbereich zwischen der Ausgangslage und der maximalen Schwenklage wesentlich vergrößert werden.

Bei allen Bewegungen des Sitzes relativ zu dem Aufbau gleiten die Gleitnocken 17 über die Bodenplatte 11, während gleichzeitig ein Abheben des Sitzes durch die auf dem Bolzen gehaltene untere Reibscheibe verhindert ist.

## Patentansprüche

1. Gabelstapler, insbesondere Front- oder Seitenstapler, mit einem fahrzeugfesten Aufbau (10), an dem ein Sitz (1) um eine im wesentlichen vertikale Achse (13) drehbar gelagert ist, dadurch gekennzeichnet, daß die Position der Achse (13) relativ zum Aufbau (10) senkrecht zur Achsenlängsrichtung entlang einer am Aufbau (10) ausgebildeten Kulisse verschiebbar ist, wobei am Aufbau (10) eine Bodenplatte (11) angebracht ist, in der eine als Kulisse dienende Ausnehmung (12) ausgebildet ist, in die die vertikale Achse (13) eingesetzt ist, und wobei die Ausnehmung einen Abschnitt, in dem die Achse (13) mindestens in Fahrzeugquerrichtung bewegbar ist, und einen im wesentlichen in Fahrzeuglängsrichtung verlaufenden geradlinigen Abschnitt (12c) aufweist, in dem die Achse (13) in Querrichtung spielfrei aufgenommen ist.

2. Gabelstapler nach Anspruch 1, dadurch gekennzeichnet, daß die vertikale Achse von einem am Sitz (1) festgelegten Bolzen (13) gebildet ist.

3. Gabelstapler nach Anspruch 1 oder 2, dadurch gekennzeichnet, daß die Ausnehmung (13) im wesentlichen dreieckförmig ausgebildet ist, wobei eine Dreickseite (12a) in Fahrzeuglängsrichtung und eine andere Dreieckseite (12b) in Fahrzeugquerrichtung ausgerichtet ist.

4. Gabelstapler nach Anspruch 1 oder 2, dadurch gekennzeichnet, daß die Ausnehmung im wesentlichen L-förmig ausgebildet ist, wobei der eine Schenkel in Fahrzeuglängsrichtung und der andere Schenkel in Fahrzeugquerrichtung angeordnet ist.

5. Gabelstapler nach einem der Ansprüche 1 bis 4, dadurch gekennzeichnet, daß der geradlinige Ausnehmungsabschnitt (12c) in dem zum Fahrzeugende weisenden Bereich der Ausnehmung ausgebildet ist.

6. Gabelstapler nach Anspruch 5, dadurch gekennzeichnet, daß der Bolzen (13) in seiner Endlage in dem geradlinigen Ausnehmungsabschnitt (12c) verrastbar ist.

7. Gabelstapler nach einem der Ansprüche 1 bis 6, dadurch gekennzeichnet, daß der Sitz (1) eine Fußplatte (9) aufweist, an der der Bolzen (13) befestigt.

8. Gabelstapler nach einem der Ansprüche 1 bis 7, dadurch gekennzeichnet, daß am Sitz (1) eine den Sitz relativ zum Aufbau (10) festlegende Arretiervorrichtung (14, 15, 16) ausgebildet ist.

9. Gabelstapler nach Anspruch 8, dadurch gekennzeichnet, daß die Arretiervorrichtung zwei auf dem Bolzen (13) verschieblich gelagerte Reibscheiben (15, 16) aufweist, die mittels einer Klemmvorrichtung (14) von entgegengesetzten Seiten gegen die Bodenplatte (11) spannbar sind.

10. Gabelstapler nach Anspruch 9, dadurch gekennzeichnet, daß die Reibscheiben (15, 16) aus Stahl und/ oder Kunststoff bestehen.

11. Gabelstapler nach Anspruch 9 oder 10, dadurch gekennzeichnet, daß die Klemmvorrichtung von einer auf den Bolzen (13) aufgeschraubten Mutter (14) gebildet ist.

12. Gabelstapler nach einem der Ansprüche 1 bis 11, gekennzeichnet durch eine zusätzliche, den Sitz (1) in bestimmten Stellungen relativ zum Aufbau festlegende Sicherungsvorrichtung.

13. Gabelstapler nach Anspruch 12, dadurch gekennzeichnet, daß die Sicherungsvorrichtung ein Sperrzylinder ist, der in seiner sichernden Stellung die Fußplatte (9) und die Bodenplatte (11) durchgreift.

14. Gabelstapler nach Anspruch 13, dadurch gekennzeichnet, daß der Sperrzylinder über einen Schalter am Armaturenbrett des Gabelstaplers betätigbar ist.

15. Gabelstapler nach Anspruch 13 oder 14, dadurch gekennzeichnet, daß der Sperrzylinder nur in Ruhestellung des Gabelstaplers in seine freigebende Stellung bringbar ist.

## Claims

1. Fork lift truck, more particularly a front loading or side loading fork lift truck, having an integral superstructure (10) on which a seat (1) is mounted so as to be able to rotate about a substantially vertical shaft (13), characterised in that the position of the shaft (13) relative to the superstructure (10) can be moved perpendicular to the shaft's longitudinal direction along a connecting link formed on the superstructure (10), there being affixed on the superstructure (10) a base plate (11) incorporating a recess (12) which serves as the connecting link and into which the vertical shaft (13) is set, and the recess features a section in which the shaft (13) is able to move at least transversely to the vehicle and a section (12c) which extends substantially in a straight line in the vehicle's longitudinal direction and which receives the shaft (13) in the transverse direction without freeplay.

2. Fork lift truck according to claim 1, characterised in that the vertical shaft is formed by a pin (13) located on the seat (1).

3. Fork lift truck according to claim 1 or 2, characterised in that the recess (13) is substantially triangular in shape, with one side (12a) of the triangle orientated longitudinally to the vehicle and another side (12b) of the triangle orientated transversely to the vehicle.

4. Fork lift truck according to claim 1 or 2, characterised in that the recess is substantially L-shaped, with one leg arranged longitudinally to the vehicle and the other leg arranged transversely to the vehicle.

5. Fork lift truck according to any of claims 1 to 4, characterised in that the straight section (12c) of the recess is formed in that portion of the recess which points towards the end of the vehicle.

6. Fork lift truck according to claim 5, characterised in that in its extreme position the pin (13) can be locked in the straight section (12c) of the recess.

7. Fork lift truck according to any of claims 1 to 6, characterised in that the seat (1) has a foot plate (9) to which the pin (13) is secured.

8. Fork lift truck according to any of claims 1 to 7, characterised in that the seat (1) incorporates a locking mechanism (14, 15, 16) which locates the seat relative to the superstructure (10).

9. Fork lift truck according to claim 8, characterised in that the locking mechanism has two friction disks (15, 16) displaceably mounted on the pin (13) and adapted to be tensioned against the base plate (11) from opposite sides by means of a clamping device (14).

10. Fork lift truck according to claim 9, characterised in that the friction disks (15, 16) are made of steel and/or plastic.

11. Fork lift truck according to claim 9 or 10, characterised in that the clamping device is formed by a nut (14) screwed onto the pin (13).

12. Fork lift truck according to any of claims 1 to 11, characterised by an additional securing device which locates the seat (1) in certain positions relative to the superstructure.

13. Fork lift truck according to claim 12, characterised in that the securing device is a blocking cylinder which in its securing position penetrates through the foot plate (9) and the base plate (11).

14. Fork lift truck according to claim 13, characterised in that the blocking cylinder is adapted to be operated via a switch on the instrument panel of the fork lift truck.

15. Fork lift truck according to claim 13 or 14, characterised in that the blocking cylinder can only be moved into its release position when the fork lift truck is at rest.

## Revendications

1. Chariot élévateur à fourche, plus particulièrement chariot frontal ou latéral, présentant une superstructure (10) fixée au véhicule, sur laquelle un siège (1) est monté pivotant autour d'un axe sensiblement vertical, caractérisé en ce que l'axe (13) peut coulisser par rapport à la superstructure perpendiculairement à l'axe longitudinal le long d'une coulisse conformée dans la superstructure (10), une plaque de fond (11) étant fixée à la superstructure (10) dans laquelle est formé un évidement (12) servant de coulisse recevant l'axe vertical (13), l'évidement présentant une partie dans laquelle l'axe (13) est mobile au moins transversalement au véhicule, et une partie (12c) rectiligne s'étendant sensiblement le long du véhicule, dans laquelle l'axe (13) est logé sans jeu transversal.

2. Chariot élévateur selon la revendication 1, caractérisé en ce que l'axe vertical est constitué par un boulon (13) fixé au siège (1).

3. Chariot élévateurs selon l'une quelconque des revendications 1 ou 2, caractérisé en ce que l'évidement (13) présente une forme sensiblement triangulaire, un des côtés du triangle (12a) s'étendant le long du véhicule et un autre côté (12b) s'étendant transversalement au véhicule.

4. Chariot élévateurs selon l'une des revendications 1 ou 2, caractérisé en ce que l'évidement présente une forme sensiblement en L, une des branches étant disposée le long du véhicule et l'autre transversalement.

5. Chariot élévateur selon l'une quelconque des revendications 1 à 4, caractérisé en ce que la partie d'évidement rectiligne (12c) est conformée dans la zone de l'évidement orientée vers l'arrière du véhicule.

6. Chariot élévateur selon la revendication 5, caractérisé en ce que le boulon (13) peut être engagé dans la partie d'évidement rectiligne (12c) dans sa position de fin de course.

7. Chariot élévateur selon l'une quelconque des revendications 1 à 6, caractérisé en ce que le siège présente une plaque d'assise (9) à laquelle est fixé le boulon (13).

8. Chariot élévateur selon l'une quelconque des revendications 1 à 7, caractérisé en ce qu'un dispositif de blocage (14,15,16) est conformé sur le siège (1) immobilisant le siège par rapport à la superstructure (10).

9. Chariot élévateur selon la revendication 8, caractérisé en ce que le dispositif de blocage présente deux disques de friction (15,16) montés déplaçables sur le boulon (13), pouvant être serrés contre la plaque de fond par des côtés opposés au moyen d'un dispositif de serrage (14).

10. Chariot élévateur selon la revendication 9, caractérisé en ce que les disques de friction (15,16) sont en acier et/ou en matière plastique.

11. Chariot élévateur selon la revendication 9 ou 10, caractérisé en ce que le dispositif de serrage consiste en un écrou (14) vissé sur le boulon (13).

12. Chariot élévateur selon l'une quelconque des revendications 1 à 11, caractérisé par un dispositif de sécurité supplémentaire fixant le siège (1) dans des positions déterminées par rapport à la superstructure.

13. Chariot élévateur selon la revendication 12, caractérisé en ce que le dispositif de sécurité est constitué par un cylindre de blocage pénétrant dans la plaque d'assise (9) et la plaque de fond (11) dans sa position de sécurité.

14. Chariot élévateur selon la revendication 13, caractérisé en ce que le cylindre de blocage peut être actionné par un interrupteur situé sur le tableau de bord du chariot élévateur.

15. Chariot élévateur selon la revendication 13 ou 14, caractérisé en ce que le cylindre de blocage ne peut être amené dans sa position de déblocage que lorsque le chariot est en position de repos.
